## Europäisches Patentamt
## European Patent Office
## Office européen des brevets

(19)

(11) Numéro de publication: **0 166 411 B1**

(12) ## FASCICULE DE BREVET EUROPEEN

(45) Date de publication du fascicule du brevet: **07.01.88**

(51) Int. Cl.⁴: **E 21 B 47/00, F 16 B 21/16**

(21) Numéro de dépôt: **85107800.6**

(22) Date de dépôt: **25.06.85**

(54) **Dispositif et méthode de mesure des efforts transmis par un arbre notamment à un outil de forage.**

(30) Priorité: **27.06.84 FR 8410138**

(43) Date de publication de la demande:
**02.01.86 Bulletin 86/1**

(45) Mention de la délivrance du brevet:
**07.01.88 Bulletin 88/1**

(84) Etats contractants désignés:
**BE DE FR GB NL**

(56) Documents cités:
**DE - B - 2 215 804**
**GB - A - 1 059 134**
**US - A - 3 686 942**
**US - A - 3 827 294**
**US - A - 4 359 898**

(73) Titulaire: **ALSTHOM, 38, avenue Kléber, F-75784 Paris Cédex 16 (FR)**

(72) Inventeur: **Obrecht, Georges, 14, rue des Muriers, F-38170 Seyssins (FR)**

(74) Mandataire: **Weinmiller, Jürgen et al, Lennéstrasse 9 Postfach 24, D-8133 Feldafing (DE)**

## Description

La présente invention concerne un dispositif de mesure des efforts transmis par un arbre, notamment à un outil de forage.

Deux méthodes de forage sont actuellement utilisées.

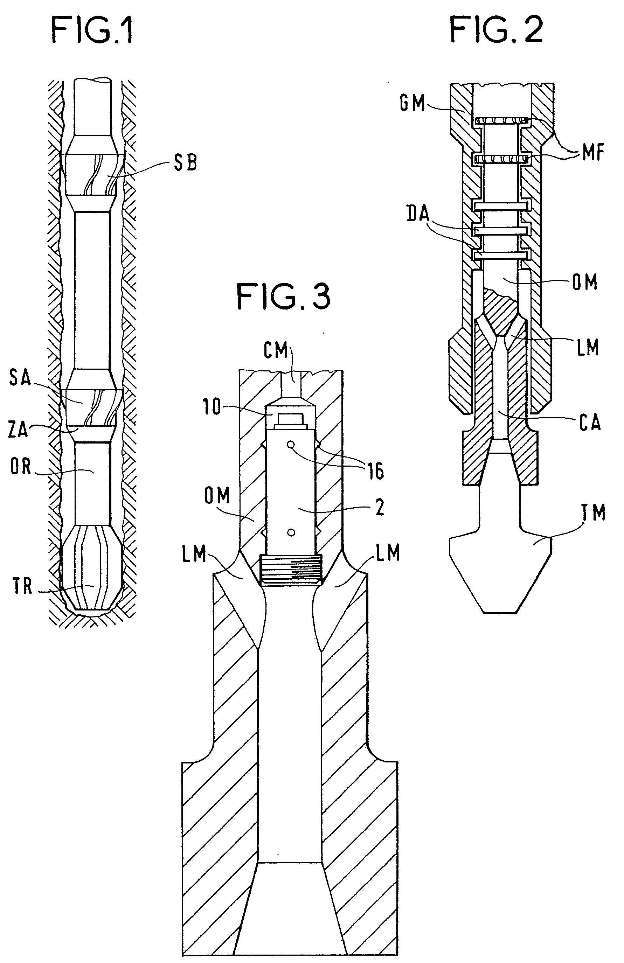

La méthode dite «rotary» est illustrée par la figure 1. Un outil TR entraîné par un arbre tubulaire OR muni, à partir de l'outil, d'un premier et d'un deuxième stabilisateur SA et SB et entraîné lui-même en rotation à partir de la surface du sol. Une boue de forage descend dans cet arbre jusqu'à l'outil et remonte autour de l'arbre.

La méthode dite à moteur de fond est illustrée par la figure 2. L'outil TM est entraîné par un arbre OM, lui-même entraîné par un moteur de fond MF et mû par la boue de forage descendant sous pression par un canal axial d'une garniture de forage GM. Cet arbre est maintenu par rapport à cette garniture par un certain nombre de disques d'appui frottants DA. La boue de forage pénètre dans un canal axial CA de cet arbre en aval de disques et de ce moteur par des lumières LM.

Quelle que soit la méthode de forage, les valeurs des afforts réels appliquées à l'outil de forage en fond de puits (couple à l'outil, poids à l'outil, effort latéral sur l'outil) ne sont connues sur le plancher de la plate-forme (en anglais «rig») qu'avec une grande imprécision en l'absence de mesure au fond du forage; en effet, le couple appliqué en surface à la garniture par la table de rotation arrive à l'outil diminué de toutes les pertes dues au frottement des tiges et des stabilisateurs contre les parois du trou, toutes valeurs fluctuantes et difficilement appréciables. Pour les mêmes raisons la connaissance du poids total au dessus de l'outil ne fournit une indication à peu près valable de la poussée axiale qu'il reçoit que pour les puits proches de la verticale quant à l'effort latéral à l'outil et aux moments de flexion sur les tiges, ils sont totalement inconnus.

Par ailleurs, compte tenu de l'ambiance dans laquelle travaillent les pièces au fond et de leurs formes et dimensions, il est difficilement envisageable de mettre en place des jauges de contrainte (par collage ou dépôt suivant les techniques les plus modernes) sur ces arbres. Or il est connu que de telles jauges constituent des capteurs bien adaptés pour la mesure des efforts en question.

La présente invention a pour but de permettre de connaître les valeurs de ces efforts réels de manière précise à l'aide d'un dispositif dont la fabrication, la mise en place et la maintenance soient faciles même lorsque la mesure doit être faite dans une ambiance aussi défavorable que celle du fond d'un forage.

Elle a notamment pour objet un dispositif de mesure des efforts transmis par un arbre, notamment à un outil de forage, ce dispositif comportant au moins un capteur de mesure fixè à un tronçon de mesure de raideur connue dudit arbre pour fournir un signal de sortie représentatif de la déformation élastique de ce tronçon sous l'action desdits efforts qu'il transmet et pour que ce signal de sortie constitue un signal de mesure de ces efforts (voir p. ex. US-A-3 686 942),

– ce dispositif étant caractérisé par le fait que ledit capteur est porté par une douille de mesure disposée coaxialement de manière amovible dans un logement formé dans ledit tronçon de mesure, cette douille étant allongée et élastiquement déformable, présentant un axe longitudinal et étant munie de plusieurs moyens d'ancrage présentant des faces externes propres à s'ancrer dans la paroi de ce logement et mobiles radialement chacun entre position effacée dans laquelle il ne fait pas saillie sur la surface extérieure de la douille pour permettre d'enlever celle-ci et une position active dans laquelle il fait saillie sur cette surface pour s'ancrer dans cette paroi, ces moyens d'ancrage étant répartis angulairement dans deux plans d'ancrage perpendiculaires audit axe de manière que cette douille et cet arbre soient solidaires l'un de l'autre dans chacun de ces deux plans lorsque ces moyens d'ancrage sont en position active, la longueur de la douille entre ces deux plans constituant une zone de mesure dans laquelle ledit capteur de mesure est fixé,

– et des moyens de manoeuvre reversibles pour placer à volonté ces moyens d'ancrage dans leurs position effacées ou dans leurs positions actives après que cette douille ait été disposée dans ce logement,

– au moins un dit capteur de mesure étant fixé sur cette douille dans cette zone de mesure pour fournir un signal de sortie représentatif des déformations de cette douille, de manière que ce signal de sortie constitue ledit signal de mesure des efforts lorsque lesdits moyens d'ancrage ont été poussés en position active.

Ce dispositif peut en outre présenter avantageusement les dispositions suivantes:

Lesdits moyens de manoeuvre comportent un plongeur mobile longitudinalment entre une position d'ancrage de la douille et une position de glissement de la douille, ce plongeur comportant plusieurs rampes de manoeuvre obliques coopérant respectivement au moins indirectement avec lesdits moyens d'ancrage de la douille de manière que le déplacement longitudinal de ce plongeur de sa position de glissement à sa position d'accrochage pousse radialement chacun de ces moyens d'ancrage dans sa position active.

Le dispositif comporte un étui allongé présentant une zone de fixation munie de moyens pour le fixer coaxialement de manière amovible dans ledit logement formé dans l'arbre, une partie de la longueur de cet étui ne comportant pas cette zone de fixation étant disposée coaxialement avec du jeu dans la douille de mesure qui présente elle-même, en dehors de sa zone de mesure, une zone de fixation par laquelle elle est fixée à cet étui de manière à pouvoir se déformer élastiquement sans déformer cet étui, cette douille ou cet étui étant munie de moyens de rappel élastique desdits moyens d'accrochage pour amener ces derniers à leur position effacée lorsque le plongeur est en position de glissement, cet étui étant percé de canaux de guidage s'étendant radialement et étant muni de pièces de transmission mobiles radialement dans ces canaux en regard de faces internes de ces moyens d'ancrage, de manière que, lors du déplacement dudit plongeur vers sa position d'ancrage, ses rampes de manoeuvre poussent d'abord ces pièces de transmission en saillie vers l'extérieur de l'étui, et que ces pièces poussent ces moyens d'ancrage dans leurs positions actives.

Ces pièces de transmission peuvent être constituées par des billes. Dans ce cas, ledit plongeur présente, à l'arrière de ses rampes de manoeuvre par rapport au sens dudit déplacement, des surfaces d'appui cylindriques coaxiales à la douille et venant au contact de ces billes lorsque le plongeur arrive dans sa position d'ancrage, lesdits moyens d'ancrage présentant sur leurs faces internes des surfaces d'appui cylindriques coaxiales au contact de ces billes, et ces trous de guidage présentant un diamètre supérieur à celui de ces billes de manière que, lorsque le plongeur est en position d'ancrage, ces moyens d'ancrage puissent se déplacer lègérement par rapport au plongeur grâce à un roulement de ces billes entre des surfaces d'appui du plongeur et des moyens d'ancrage.

Lesdits moyens de rappel élastique des moyens d'ancrage de la douille sont formés par des languettes portant chacune un moyen d'ancrage et présentant chacune une longueur selon une direction de la surface de la douille, une largeur selon une direction de la surface de la douille perpendiculaire è cette longueur, et, selon la direction radiale une épaisseur plus faible que cette largeur et cette longueur, au moins une extrémité longitudinale de chaque languette étant solidaire de la douille à distance du moyen d'ancrage de manière que la languette soit flexible selon sa longueur et constitue en même temps un moyen de liaison rigide empêchant les déplacements de ce moyen d'ancrage par rapport à la douille parallèlement à la surface de celle-ci.

La longueur de la languette est par exemple parallèle à l'axe de la douille si les principales sollicitations appliquées sont parallèles à cet axe. Si au contraire les directions de ces sollicitations étaient principalement circonférentielles, les longueurs des languettes seraient elles aussi circonférentielles.

Ledit étui présente une extrémité arrière élargie creuse portant un filetage extérieur pour le fixer dans le logement de l'arbre et un filetage intérieur pour recevoir une vis de manoeuvre pour pousser et tirer ledit plongeur.

Un prolongement de ladite vis de manoeuvre est solidarisé longitudinalment au plongeur par un système à goupille radiale et à gorge circonférentielle, un déplacement angulaire du plongeur par rapport à l'étui étant empêché par un système à goupille radiale et rainure longitudinale.

Ledit plongeur et ladite vis de manoeuvre sont de formes annulaires pour laisser un passage axial à un fluide tel qu'une boue de forage irrigant un outil au bout dudit arbre.

Lesdits moyens d'ancrage portent des pointes d'ancrage sur leurs faces externes.

La douille de mesure au moins est constituée d'acier. Le plus souvent c'est l'ensemble du dispositif qui est constitué d'acier, comme le sont les dispositifs qui seront décrits plus loin à titre d'exemple.

La raideur de la douille est choisie inférieure à 1% de celle dudit tronçon d'arbre pour que les efforts appliqués auxdits moyens d'ancrage soient faibles.

La présente invention a aussi pour objet une méthode de mesure des efforts appliqués en service à un outil de forage par un arbre de transmission présentant un axe, caractérisée par le fait qu'on place coaxialement un dispositif selon l'invention dans un logement cylindrique formé coaxialement dans un tronçon de cet arbre entre l'outil et la plus proche zone (ZA) dans laquelle un autre effort est susceptible d'être appliqué à cet arbre.

Il apparaît que selon l'invention on indroduit, dans la pièce sollicitée par les efforts à mesurer, c'est-à-dire dans le tronçon d'arbre précédemment mentionné, un dispositif de mesure indépendant et amovible qui délivrera l'information d'effort recherchée. Et on rend solidaires de deux sections distinctes de la pièce sollicitée, deux sections de ce dispositif qui sont rigides et indépendantes et dont les mouvements relatifs lors de la sollicitation sont représentatifs des déplacements relatifs des sections de la pièce, ces déplacements étant directement proportionnels aux sollicitations.

A l'aide des figures schématiques ci-jointes on va décrire ci-après, à titre non limitatif, comment l'invention peut être mise en oeuvre. Il doit être compris que les éléments décrits et représentés peuvent, sans sortir du cadre de l'invention, être remplacés par d'autres éléments assurant les mêmes fonctions techniques. Lorsqu'un même élément est représenté sur plusieurs figures il y est désigné par le même signe de référence.

La figure 1 représente une vue en coupe axiale de la partie basse d'un dispositif de forage du type rotary.

La figure 2 représente une vue en coupe axiale de la partie basse d'un dispositif de forage du type à moteur de fond.

La figure 3 représente une vue en coupe axiale d'un détail à échelle agrandie du dispositif de la figure 2 après creusement d'un logement et mise en place dans ce logement d'un dispositif de mesure selon un premier mode de réalisation de l'invention.

Les figures 4 et 5 représentent des vues en demi-coupes axiales à gauche et en demi-élévations à droite, à échelle agrandie, du dispositif de mesure de la figure 3, les moyens d'ancrage de la douille étant en position effacée sur la figure 4 et en position active sur la figure 5, l'arbre étant représenté en coupe axiale.

La figure 6 représente une vue en coupe transversale du dispositif de la figure 5 selon un plan VI-VI.

La figure 7 représente dans sa partie gauche une vue en demi-coupe axiale d'un deuxième dispositif de mesure selon l'invention après sa mise en place dans le canal axial de l'arbre d'un dispositif de forage selon la figure 1. Elle représente dans sa partie droite une vue en élévation de ce dispositif, l'arbre étant représenté coupé par un plan axial parallèle au plan de la figure.

La figure 8 représente une vue d'un troisième dispositif selon l'invention en coupe axiale partielle à échelle agrandie pour montrer une variante de réalisation d'une pièce de transmission, les moyens d'ancrage de la douille étant en position effacée.

Sur ces figures l'axe (11, 68) des douilles des dispositifs de mesure selon l'invention est représentée verticale et ces dispositifs sont introduit de bas en haut dans les logements correspondants, de sorte que les extrémités avant ou arrière précédemment mentionnées sont en même temps des extrémités supérieure ou inférieure, respectivement.

Conformément à la figure 3, on a creusé dans l'arbre OM du dispositif de forage à moteur de fond de la figure 2, un canal axial CM pour le passage d'un câble de transmission électrique transmettant les mesures faites selon l'invention. Ce canal s'élargit à son extrémité inférieure pour former un logement axial 10 en amont de l'endroit où le fluide moteur passe, par les lumières LM aménagées dans l'arbre OM, de l'extérieur à l'intérieur de celui-ci afin d'accéder à l'outil.

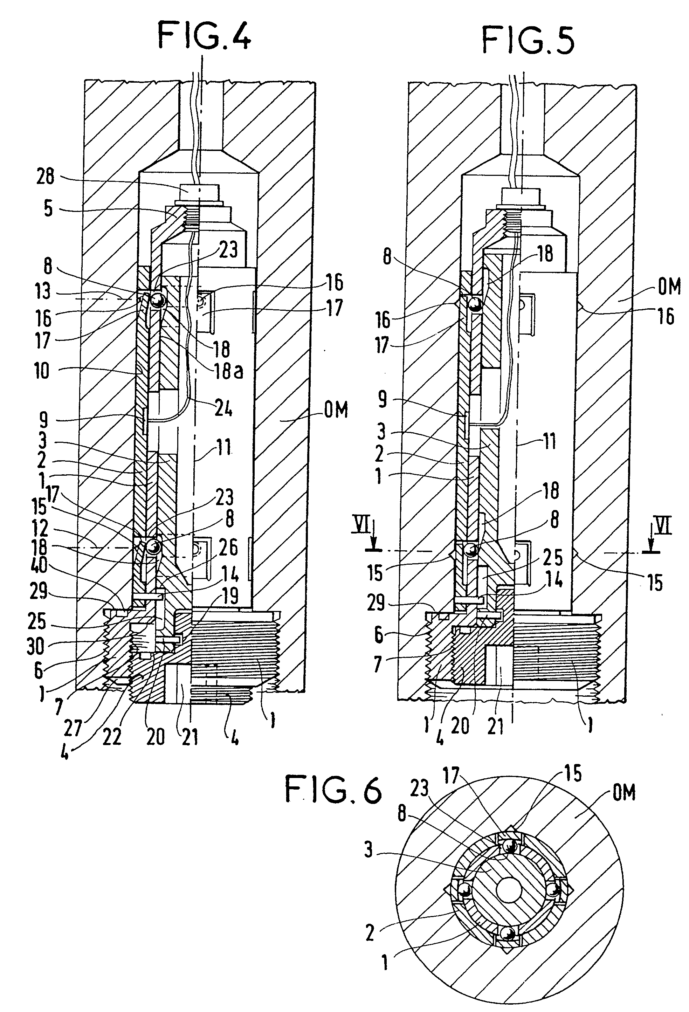

Ce logement est calibré et permet l'implantation du dispositif de mesure des figures 4, 5 et 6, qui constitue un boîtier étanche. Ce dernier comporte essentiellement:
– un étui qui vient se visser dans le logement 10 de l'arbre,
– une douille 2 montée large sur l'étui 1 qu'elle recourve,
– un plongeur 3 coulissant dans l'étui 1,
– un bouchon fileté 4 qui se visse dans l'étui 1 en entraînant le plongeur 3 dans son mouvement d'avance.

L'étui 1 est cylindrique dans sa partie centrale et comporte à une extrémité supérieure un rétrécissement 5 qui peut recevoir une embase de connection. Son autre extrémité est élargie et porte un filetage extérieur 6 et un filetage intérieur 7. Dans la partie cylindrique sont percés des canaux de guidage cylindriques à axes radiaux 23. Dans ces canaux sont disposées des pièces de transmission continuées ici par des billes 8. Ces canaux sont situés dans deux plans d'encrage 12 et 13 parallèles entre eux et perpendiculaires à l'axe 11.

La douille 2 porte sur sa face interne plusieurs jauges de contraintes telles que 9 permettant de connaître complètement le déplacement mutuel de deux sections circulaires rigides de la douille,ces sections étant celles qui sont définies par les plans 12 et 13. Elle est liée à l'étui 1 par une fixation ponctuelle 14 qui est réalisée par une goupille radiale à l'extérieur d'un tronçon de mesure qui s'étend longitudinalement entre les plans 12 et 13. Elle porte, dans les plans 12 et 13 où se trouvent les billes, des protubérances 15 et 16 en forme de cône ou de pointe diamant. Ces protubérances constituent lesdits moyens d'ancrage. Elles sont portées par des languettes 17, élastiques dans le sens radial, mais raides dans les directions du plan tangent en ce point au cylindre extérieur à la douille.

Le plongeur 3 possède sur sa surface extérieure deux gorges 18 circulaires coaxiales à l'arbre 11 dont la forme est costituée d'un quart de tore vers le haut, d'un tronc de cylindre au milieu et d'un tronc de cône aigu vers le bas pour former une rampe de manœuvre, qui se raccorde vers le bas à la surface cylindrique courante 18a du plongeur, cette dernière constituant une surface d'appui pour les billes 8 au voisinage de cette rampe.

Un bouchon 4 formant vis de manœuvre comporte un logement (hexagonal ou carré) d'entraînement 21. Le bouchon 4 vient se visser dans le filetage intérieur 7 de l'étui 1. Le bouchon 4 est pourvu d'une gorge circulaire 19 dans laquelle se loge une goupille 20 solidaire du plongeur 3. Lors du vissage du bouchon 4 par son logement d'entraînement 21, l'avance axiale de ce bouchon 4 se transmet au plongeur 3 par appui de l'épaulement 22. Dans ce mouvement, les billes 8 qui sont logées dans les canaux 23 de l'étui 1, et qui étaient initialement dans le fond des rainures 18, sont repoussées progressivement par la rampe tronconique de ces gorges et viennent s'appuyer radialement sur les languettes 17, juste sous les protubérances 15 et 16. Les pointes très fines de ces dernières s'ancrent dans l'arbre OM et solidarisent rigidement dans les plans 12 et 13 les sections de cet arbre avec les sections de la douille 2 qui porte les jauges. Lors des sollicitations appliquées à l'arbre, ces sections subissent des mouvements (écartements/rapprochements pour les sollicitations axiales, inclinaison relative pour les sollicitations de flexion et rotations relatives autour de l'axe pour les sollicitations de torsion). La douille 2 est aménagée avec des rainures disposées pour que les mouvements des sections 12 et 13 n'entraînent que des efforts très limités sur les ancrages 15 et 16 et pour que la quasi totalité de ces mouvements soit amenée à la zone où sont implantées les jauges de mesure 9. Les fils 24 de raccordement de connection 28 du commerce pour permettre le raccordement au câble de transmission précédemment mentionné. Des gorges 40 reçoivent des joints d'étanchéité toriques non représentés.

La mise en place de l'apareil dans l'arbre OM s'effectue simplement.

Après la mise en place de la connection 28, le dispositif est présenté dans sa configuration de la figure 4, bouchon 4 dévissé. Il est vissé dans le logement 10 grâce au filetage 6, jusqu'au blocage sur l'épaulement étanché 29 de l'arbre OM. L'opération suivante consiste simplement à visser le bouchon 4 comme décrit précédemment jusqu'à appui de l'éapaulement 22 sur le fond 30 de l'étui 1. Le dispositif est alors en fonction.

L'extraction de l'appareil est aussi simple que sa mise en place. Le bouchon 4 est dévissé jusqu'à ce que le fond 26 de la rainure 25 du plongeur 3 arrive au contact de la goupille 14 liée à l'étui 1. Les billes 8 reprennent leur position dans les rainures 18, autorisant alors les languettes élastiques 17 à dégager les protubérances 15 et 16 des ancrages dans l'arbre OM.

Il suffit alors de dévisser l'étui 1 par des crans 27 de sa partie inférieure pour dégager le dispositif.

Le dispositif précédemment décrit peut aisément s'inscrire dans un diamètre de 35 à 40 mm. Mais il peut être adapté à des transmissions tubulaires de grand diamètre. On peut utiliser des douilles d'épaisseur 10 à 20 mm pour des diamètres très importants, par exemple 100 à 400 mm.

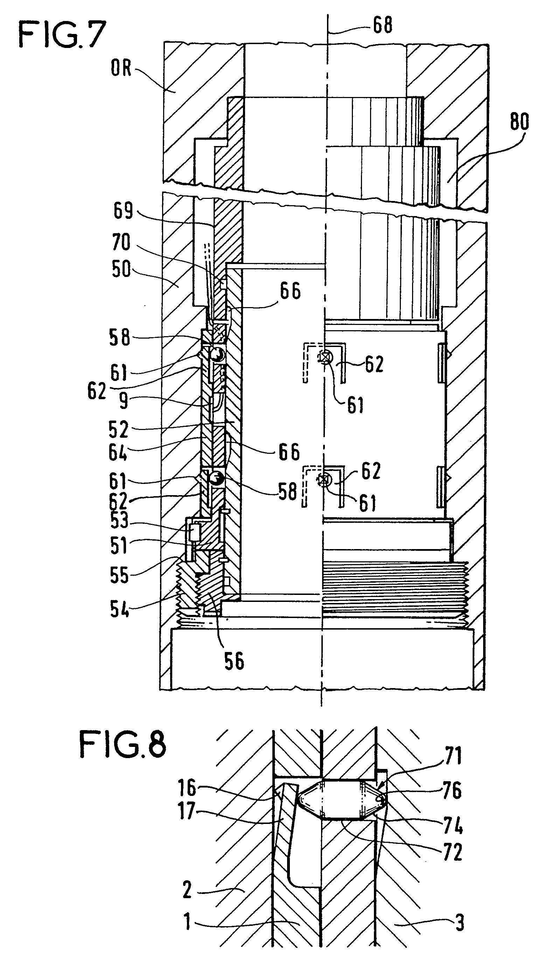

Les dispositif dans le cas qui est par exemple celui du forage rotary de la figure 1 est analogue au précédent et peut être conforme à la figure 7.

Dans ce cas, l'étui 51 est inséré axialement dans un corps 50 faisant partie de l'arbre OR. Une rainure de clavette 53 assure une indexation angulaire de l'étui 51 dans le corps 50. Puis l'écrou 54 est vissé jusqu'à l'épaulement 55. On peut alors procéder au vissage de la vis 56 dans l'écrou 54, cette opération entraînant la translation axiale d'un plongeur constitué par une douille plongeuse 52. Cette dernière a deux fonctions essentielles: assurer l'ancrage des protubérances 61 (portées par des languettes 62) dans le corps 50 par appui sur les billets 58 et assurer l'étanchéité du dispositif vis-à-vis du milieu. La zone de mesure est représentée en 64, les rampes de manoeuvre en 66, et l'axe de l'ensemble en 68. L'arbre OR reçoit une jupe intérieure 69 munie d'une rainure 70 pour un joint d'étanchéité venant en appui sur la douille plongeuse 52. Cette jupe intérieure 69 permet d'arbitrer dans un logement 80 le matériel électronique associé aux jauges de contraintes 9.

Dans le dispositif représenté sur la figure 8 lesdites pièces de transmission 71 mobiles radialement dans les canaux de guidage 23 de l'étui 1 sont allongées selon la direction radiale du dispositif et présentent, sur une partie de leurs longueurs des surfaces de guidage cylindriques ou prismatiques 72 coopérant avec ces canaux de guidage pour empêcher tout pivotement de ces pièces autour d'axes parallèles à la direction circonférentielle du dispositif, de manière que ces pièces appliquent une force seulement radiale aux faces internes desdits moyens d'ancrage 16 de la douille de mesure 2.

## Revendications

1. Dispositif de mesure des efforts transmis par un arbre, notamment à un outil de forage, ce dispositif comportant au moins un capteur de mesure fixé à un tronçon de mesure de raideur connue dudit arbre (OM) pour fournir un signal de sortie représentatif de la déformation élastique de ce tronçon sous l'action desdits efforts qu'ils transmet et pour que ce signal de sortie constitue un signal de mesure de ces efforts,
caractérisé par le fait que ledit capteur (9) est porté par une douille de mesure (2) disposée coaxialément de manière amovible dans un logement formé dans ledit tronçon de mesure, cette douille étant allongée et élastiquement déformable, présentant un axe longitudinal (11) et étant munie de plusieurs moyens d'ancrage (15, 16) présentant des faces externes propres à s'ancrer dans la paroi de ce logement et mobiles radialement chacun entre une position effacée dans laquelle il ne fait pas saillie sur la surface extérieure de la douille pour permettre d'enlever celle-ci et une position active dans laquelle il fait saillie sur cette surface pour s'ancrer dans cette paroi, ces moyens d'ancrage étant répartis angulairement dans deux plans d'ancragee (12, 13) perpendiculaires audit axe de manière que cette douille et cet arbre soient solidaires l'un de l'autre dans chacun de ces deux plans lorsque ces moyens d'ancrage sont en position active, la longueur de la douille entre ces deux plans constituant une zone de mesure dans laquelle ledit capteur de mesure (9) est fixé, qu'il y a des moyens de manoeuvre reversibles (3) pour placer à volonté ces moyens d'ancrage dans leurs positions effacées ou dans leurs positions actives après que cette douille ait été disposée dans ce logement, et au moins un dit capteur de mesure fixé sur cette douille dans cette zone de mesure pour fournir un signal de sortie représentatif des déformations de cette douille, de manière que ce signal de sortie constitue ledit signal de mesure des efforts lorsque lesdits moyens d'ancrage ont été poussés en position active.

2. Dispositif selon la revendication 1, caractérisé par le fait que lesdits moyens de manoeuvre comportent un plongeur (3) mobile longitudinalement entre une position d'ancrage de la douille et une position de glissement de la douille, ce plongeur comportant plusieurs rampes de manoeuvres obliques (18) coopérant respectivement au moins indirectement avec lesdits moyens d'ancrage (15, 16) de la douille de manière que le déplacement longitudinal de ce plongeur de sa position de glissement à sa position d'ancrage pousse radialement chacun de ces moyens d'ancrage dans sa position active.

3. Dispositif selon la revendication 2, caractérisé en ce qu'il comporte en outre un étui allongé (1) présentant une zone de fixation munie de moyens (6) pour le fixer coaxialement de manière amovible dans ledit logement formé dans l'arbre (OM), une partie de la longueur de cet étui ne comportant pas cette zone de fixation étant disposée coaxialement avec du jeu dans la douille de mesure (2) qui présente elle-même en dehors de sa zone de mesure une zone de fixation par laquelle elle est fixée à cet étui de manière à pouvoir se déformer élastiquement sans déformer cet étui, cette douille ou cet étui étant munie de moyens de rappel élastique (17) desdits moyens d'ancrage (16) pour amener ces derniers à leur position effacée lorsque le plongeur est en position de glissement, cet étui étant percé de canaux de guidage (23) s'étendant radialement et étant muni de pièces de transmission (8) mobiles radialement dans ces canaux en regard de faces internes de ces moyens d'encrage, de manière que, lors du déplacement dudit plongueur vers sa position d'ancrage, ses rampes de manoeuvre poussent ces pièces de transmission en saillie vers l'extérieur de l'étui, et que ces pièces poussent ces moyens d'ancrage dans leurs positions actives.

4. Dispositif selon la revendication 3, caractérisé par le fait que lesdites pièces de transmission sont constituées par des billes et que ledit plongeur (3) présente, à l'arrière de ses rampes de manoeuvre (18) par rapport au sens dudit déplacement, des surfaces d'appui cylindriques (18a) coaxiales à la douille (2) et venant au contact de ces billes (8) lorsque le plongeur arrive dans sa position d'ancrage, lesdits moyens d'ancrage (15, 16) présentant également sur leurs faces internes des surfaces d'appui cylindriques coaxiales au contact de ces billes, et ces trous de guidage présentant un diamètre supérieur à celui de ces billes de manière que, lorsque le plongeur est en position d'ancrage, ces moyens d'ancrage puissent se déplacer légèrement par rapport au plongeur grâce à un roulement de ces billes entre des surfces d'appui du plongeur et des moyens d'ancrage.

5. Dispositif selon la revendication 3, caractérisé par le fait que lesdits moyens de rappel élastique des moyens d'ancrage (16) de la douille (2) sont formés par des languettes (17) portant chacune un moyen d'ancrage et présentant chacune une longueur selon une direction de la surface de la douille, une largeur selon une direction de la surface de la douille perpendiculaire à la longueur, et, selon la direction radiale de la douille, une épaisseur plus faible que cette largeur et cette longueur, au moins une extremité longitudinale de chaque languette étant solidaire de la douille à distance du moyen d'ancrage de manière que la languette soit flexible selon sa longueur et constitue en même temps un moyen de liaison rigide empêchant les déplacements de ce moyen d'ancrage par rapport à la douille parallèlement à la surface de celle-ci.

6. Dispositif selon la revendication 3, caractérisé par le fait que ledit étui (1) présente une extrémité arrière élargie creuse portant un filetage extérieur (6) pour le fixer dans le logement de l'arbre (OM) et un filetage intérieur (7) pour recevoir une vis de manœuvre (4) pour pousser et tirer ledit plongeur (3).

7. Dispositif selon la rivendication 6, caractérisé par le fait qu'un prolongement de ladite vis de manœuvre (4) est solidarisé longitudinalement du plongeur (3) par un système à goupille radiale (20) et à gorge circonférentielle (19), un déplacement angulaire du plongeur (3) par rapport à l'étui (1) étant empêché par un système à goupille radiale (14) et rainure longitudinale (25).

8. Dispositif selon la revendication 6, caractérisé par le fait que ledit plongeur (52) et ladite vis de manoeuvre (56) sont des formes annulaires pour laisser un passage axial à un fluide tel qu'une boue de forage irrigant un outil (TR) au bout dudit arbre (OM).

9. Dispositif selon la revendication 1, caractérisé par le fait que lesdits moyens d'ancrage portent des pointes d'ancrage sur leurs faces externes.

10. Dispositif selon la revendication 3, caractérisé par le fait que lesdites pièces de transmission (71) mobiles radialement dans les canaux de guidage (23) de l'étui (1) sont allongées selon la direction radiale du dispositif et présentent, sur une partie de leurs longueurs des surfaces de guidage cylindriques ou prismatiques (72) coopérant avec ces canaux de guidage pour empêcher tout pivotemen de ces pièces autour d'axes parallèles à la direction circonférentielle du dispositif, de manière que ces pièces appliquent une force seulement radiale aux faces internes desdits moyens d'ancrage (16) de la douille de mesure (2).

11. Dispositif selon la revendication 1, dans laquel la douille de mesure (2) au moins est constituée d'acier.

12. Méthode de mesure des efforts appliqués en service à un outil de forage par un arbre de transmission présentant un axe, caractérisé par le fait qu'on place coaxialement un dispositif selon la revendication 1 dans un logement cylindrique formé coaxialement dans un tronçon de cet arbre (OM) entre l'outil (TM) et la plus proche zone (ZA) dans laquelle un autre effort est susceptible d'être appliqué à cet arbre, la raideur de ladite douille étant choisie inférieure à 1% de celle de ce tronçon d'arbre pour que les efforts appliqués auxdits moyens d'encrage (15, 16) soient faibles.

## Patentansprüche

1. Vorrichtung zum Messen der durch eine Welle übertragenen Kräfte, insbesondere auf ein Bohrwerkzeug, wobei diese Vorrichtung mindestens eine Messsonde aufweist, die an einem Steifigkeitsmessabschnitt der Welle (OM) befestigt ist, um ein Ausgangssignal zu liefern, das repräsentativ für die elastische Verformung dieses Abschnitt unter Einwirkung der von ihm übertragenen Kräfte ist, und damit das Ausgangssignal ein Messsignal dieser Kräfte darstellt,

dadurch gekennzeichnet, dass die Sonde (9) von einer Messbuchse (2) getragen wird, die koaxial und entfernbar in einer in diesem Messabschnitt gebildeten Kammer angeordnet ist, wobei diese Buchse länglich und elastisch verformbar ist, eine Längsachse (11) aufweist und mit mehreren Verankerungsmitteln (15, 16) ausgestattet ist, die äussere Seiten aufweisen, welche sich in der Wand dieser Kammer verankern können, und die jedes radial zwischen einer eingezogenen Stellung, in der sie nicht über die Aussenoberfläche der Buchse vorstehen, um ihre Entfernung zu ermöglichen, und einer aktiven Stellung beweglich sind, in der sie über diese Oberfläche vorstehen, um sich in dieser Wand zu verankern, wobei diese Verankerungsmittel in zwei Verankerungsebenen (12, 13) senkrecht zur Achse winkelmässig verteilt sind, so dass diese Buchse und diese Welle in jeder dieser beiden Ebenen fest miteinander verbunden sind, wenn die Verankerungsmittel sich in der aktiven Stellung befinden, wobei die Länge der Buchse zwischen diesen beiden Ebenen einen Messbereich bildet, in dem die Messsonde (9) befestigt ist, dass reversible Betätigungsmittel (3), um nach Wunsch diese Verankerungsmittel in ihre eingezogene Stellung oder in ihre aktive Stellung zu bringen, nachdem die Buchse in der Kammer angebracht wurde, und mindestens eine Messsonde vorhanden sind, die auf dieser Buchse in diesem Messbereich befestigt ist, um ein Ausgangssignal zu liefern, das für die Verformungen dieser Buchse repräsentativ ist, so dass dieses Ausgangssignal das Kräftemesssignal bildet, wenn die Verankerungsmittel in die aktive Stellung gedrückt worden sind.

2. Vorrichtung nach Anspruch 1, dadurch gekennzeichnet, dass die Betätigungsmittel ein in Längsrichtung zwischen einer Verankerungsstellung der Buchse und einer Gleitstellung der Buchse bewegliches Gleitglied (3) aufweisen, das mehrere schräge Betätigungsrampen (18) aufweist, die zumindest indirekt mit den Verankerungsmitteln (15, 16) der Buchse zusammenwirken, damit die Längsbewegung dieses Gleitglieds von seiner Gleitstellung zu seiner Verankerungsstellung radial jedes dieser Verankerungsmittel in seine aktive Stellung drückt.

3. Vorrichtung nach Anspruch 2, dadurch gekennzeichnet, dass sie weiter eine längliche Hülse (1) enthält, die einen Befestigungsbereich mit Mitteln (6) aufweist, um sie koaxial und entfernbar in der in der Welle (OM) ausgebildeten Kammer zu befestigen, wobei ein Teil der Länge dieser Hülse, das diesen Befestigungsbereich nicht aufweist, koaxial mit Spiel in der Messbuchse (2) angeordnet ist, die selbst ausserhalb ihres Messbereichs einen Befestigungsbereich aufweist, durch den sie an dieser Hülse befestigt ist, um sich elastisch verformen zu können, ohne diese Hülse zu verformen, wobei diese Buchse oder diese Hülse mit elastischen Rückholmitteln (17) der Verankerungsmittel (16) ausgestattet sind, um diese letzteren in ihre eingezogene Stellung zu bringen, wenn das Gleitglied sich in der Gleitstellung befindet, wobei diese Hülse Leitkanäle (23) aufweist, die sich radial erstrecken und mit Übertragungsstücken (8) versehen sind, die radial in diesen Kanälen gegenüber von Innenseiten dieser Verankerungsmittel beweglich sind, so dass während der Bewegung des Gleitglieds in seine Verankerungsstellung seine Betätigungsrampen diese Übertragungsstücke vorstehend nach aussen aus der Hülse heraus drücken, und dass diese Stücke die Verankerungsmittel in ihre aktiven Stellungen drücken.

4. Vorrichtung nach Anspruch 3, dadurch gekennzeichnet, dass die Übertragungsstücke aus Kugeln bestehen und dass das Gleitglied (3) hinter seinen Betätigungsrampen (18) in bezug auf die Bewegungsrichtung zylindrische und zur Buchse (2) koaxiale Anlageoberflächen aufweist, die mit diesen Kugeln (8) in Berührung treten, wenn das Gleitglied in seiner Verankerungsstellung ankommt, wobei die Verankerungsmittel (15, 16) ebenfalls auf ihren Innenflächen zylindrische koaxiale Anlageoberflächen aufweisen, die mit den Kugeln in Kontakt stehen, und die Leitlöcher einen grösseren Durchmesser als die Kugeln aufweisen, so dass, wenn das Gleitglied sich in Verankerungsstellung befindet, diese Verankerungsmittel sich leicht in bezug auf das Gleitglied bewegen können aufgrund eines Rollens dieser Kugeln zwischen den Anlageoberflächen des Gleitglieds und der Verankerungsmittel.

5. Vorrichtung nach Anspruch 3, dadurch gekennzeichnet, dass die elastischen Rückholmittel der Verankerungsmittel (16) der Buchse (2) aus Zungen (17) bestehen, die je ein Verankerungsmittel tragen und die je eine Länge entsprechend einer Richtung der Buchsenoberfläche, eine Breite entsprechend einer Richtung der Buchsenoberfläche senkrecht zur Länge, und entsprechend der radialen Richtung der Buchse eine Dicke aufweisen, die kleiner ist als die Breite und die Länge, wobei mindestens ein Längsende jeder Zunge im Abstand zum Verankerungsmittel mit der Buchse fest verbunden ist, so dass die Zunge entsprechend ihrer Länge flexibel ist und gleichzeitig ein starres Verbindungsmittel darstellt, das die Bewegungen dieses Verankerungsmittels in bezug auf die Buchse parallel zur Oberfläche der letzeren verhindert.

6. Vorrichtung nach Anspruch 3, dadurch gekennzeichnet, dass die Hülse (1) ein erweitertes hohles hinteres Ende aufweist, das ein Aussengewinde (6) trägt, um es in der Kammer der Welle (OM) zu befestigen, und ein Innengewinde (7), um eine Betätigungsschraube (4) aufzunehmen, um das Gleitglied (3) zu drücken und zu ziehen.

7. Vorrichtung nach Anspruch 6, dadurch gekennzeichnet, dass eine Verlängerung der Betätigungsschraube (4) in Längsrichtung über ein System mit radialem Stift (20) und Umfangskehle (19) fest mit dem Gleitglied (3) verbunden ist, wobei eine winkelmässige Verschiebung des Gleitglieds (3) in bezug auf die Hülse (1) durch ein System mit radialem Stift (14) und Längsnut (25) verhindert wird.

8. Vorrichtung nach Anspruch 6, dadurch gekennzeichnet, dass das Gleitglied (52) und die Betätigungsschraube (56) ringförmig sind, um einen axialen Durchlass für ein Fluid wie z. B. Bohrschlamm freizulassen, das ein Werkzeug (TR) am Ende der Welle (OM) anströmt.

9. Vorrichtung nach Anspruch 1, dadurch gekennzeichnet, dass die Verankerungsmittel auf ihren Aussenseiten Verankerungsspitzen aufweisen.

10. Vorrichtung nach Anspruch 3, dadurch gekennzeichnet, dass die radial in den Führungakanälen (23) der Hülse (1) beweglichen Übertragungsstücke (71) in radialer Richtung der Vorrichtung verlängert sind und auf einem Teil ihrer Länge zylindrische oder prismatische Führungsoberflächen (72) aufweisen, die mit diesen Führungskanälen zusammenwirken, um jedes Schwenken dieser Stücke um Achsen parallel zur Umfangsrichtung der Vorrichtung zu vermeiden, so dass diese Stücke nur eine radiale Kraft auf die Innenseiten der Verankerungsmittel (16) der Messbuchse (2) ausüben.

11. Vorrichtung nach Anspruch 1, in der zumindest die Messbuchse (2) aus Stahl besteht.

12. Verfahren zur Messung der in Betrieb auf ein Bohrwerkzeug durch eine Übertragungswelle mit einer Achse ausgeübten Kräfte, dadurch gekennzeichnet, dass man eine Vorrichtung gemäss Anspruch 1 koaxial in einer zylindrischen Kammer anordnet, die koaxial in einem Abschnitt dieser Welle (OM) zwischen dem Werkzeug (TM) und der nächstliegenden Zone (ZA), in der eine andere Kraft auf diese Welle ausgeübt werden kann, liegt, wobei die Steifigkeit dieser Buchse geringer als 1% der Steifigkeit dieses Wellenabschnitts gewählt wird, so dass die auf die Verankerungsmittel (15, 16) ausgeübten Kräfte schwach sind.

**Claims**

1. A measuring device for measuring the stresses transmitted by a shaft, in particular to a drilling tool, said device comprising at least one measuring sensor fixed to a measuring portion of known stiffness of said shaft (OM) to supply an output signal representative of the elastic deformation of said portion in response to said stresses which it transmits, such that said output signal serves as a measurement signal of said stresses,
characterized in that said sensor (9) is carried in a removable measurement socket (2), arranged coaxially in a compartment formed in said measurement portion, said socket being elongated and elastically deformable, presenting a longitudinal axis (11) and being fitted with a plurality of anchoring means (15, 16) with external faces adapted to anchor themselves in the wall of said compartment, and being each radially mobile between a retracted position where it does not project from the outer surface of said socket, to enable the removal thereof, and an active position where it does project from said surface, to anchor itself in said wall, said anchoring means being angularly distributed in two anchoring planes (12, 13) perpendicular to said axis, so that the socket and the shaft interlock in both of said planes when said anchoring means are in their active position, the length of said socket between said two planes constituting a measurement area wherein said sensor (9) is attached, that there are reversible manœuvring means (3) for putting said anchoring means in their retracted or in their active positions after said socket has been placed in said compartment, and at least one said measuring sensor attached to the socket in said measurement area to supply an output signal reflecting the deformations affecting said socket, such that the output signal serves as the stress measurement signal when said anchoring means have been pushed into active position.

2. A device according to claim 1, characterized in that said manoeuvring means comprise a plunger (3) operable to slide longitudinally between a position anchoring said socket and a position where said socket is slidable, said plunger having a plurality of control slopes (18) respectively cooperating, at least indirectly, with said socket anchoring means (15, 16) such that the longitudinal displacement of said plunger from its sliding position to its catching position radially thrusts out each of said anchoring means into its active position.

3. A device according to claim 2, characterized in that it further comprises an oblong sheath (1) having a fastening area equipped with means (6) for coaxially attaching it in a removable manner within said compartment in the shaft (OM), part of the lenght of said sheath beyond said fastening area being coaxially arranged within said measuring socket (2) with some clearance, said socket itself having a fastening area, outside its measurement area, by which it is attached to said sheath so as to be abe to elastically deform without deforming said shealth, said socket or said sheath being provided with elastic means (17) for pulling back said anchoring means (16) to set the latter in their retracted position when the plunger is in sliding position, said sheath being transpersed by radially extending guiding channels (23) and being equipped with transmission parts (8) operable to move radially within said channels in front of inside faces of said anchoring means, such that, as the said plunger moves to its anchoring position, said slopes first thrust out said transmission parts, and that these parts thrust out said anchoring means into their active positions.

4. A device according to claim 3, characterized in that said transmission parts consist of balls and that said plunger (3) presents cylindrical bearing surfaces (18a) downstream of its control slopes (18) with respect to the moving direction, these surfaces bearing a coaxial relation with said socket (2) and making contact with said balls (8) when the plunger reaches its anchoring position, said anchoring means (15, 16) also having on their inside surfaces similar coaxial cylindrical bearing surfaces in contact with said balls, and said guide holes having a larger diameter than that of said balls, such that when the plunger is in anchoring position, said anchoring means are able to move slightly relative to the plunger due to the balls rolling between bearing surfaces to the plunger and the anchoring means.

5. A device according to claim 3, characterized in that said elastic pull-back means of the anchoring means (16) of the socket (2) consist of tabs (17), each carrying one anchoring means and each extending lengthwise in one direction of the surface of the socket, extending widthwise in another direction of said surface, perpendicular to said lengthwise extension, and having a radial thickness less than said length and said width, at least one longitudinal end of each tab being attached to the socket away from said anchoring means, so that the tab is flexible lengthwise and constitutes at the same time a rigid connection means blocking the movements of said anchoring means relative to the socket in parallel relation to the surface of said socket.

6. A device according to claim 3, characterized in that said sheath (1) has an enlarged, hollow back end, which is provided with an outside thread (6) for the purpose of fixing it in the shaft (OM) compartment, and an inside thread (7) to receive a control screw (4) operable to push and pull said plunger (3).

7. A device according to claim 6, characterized in that an extension of said control screw (4) is made longitudinally fast with the plunger (3) by a radial pin (20) and a circumferential groove (19) combination, an angular movement of the plunger (3) relative to the sheath (1) being prevented by a radial pin (14) and longitudinal groove (25) combination.

8. A device according to claim 6, characterized in that said plunger (52) and said control screw (56) are both given an annular shape to allow axial passage of a fluid such as a drilling mud wetting a tool (TR) on the end of said shaft (OM).

9. A device according to claim 1, characterized in that said anchoring means have anchoring points on their outside faces.

10. A device according to claim 3, characterized in that said transmission parts (71) adapted to move radially along said guiding channels (23) of the sheath (1) are elongated in the radial direction of the device and present, along part of their lengths, either cylindrical or prism-shaped guiding surfaces (72) cooperating with these guiding channels for preventing any swivelling of said parts about axes parallel to the circumferential direction of the device, so that these parts exert only a radial force on the inside faces of said anchoring means (16) of the measuring socket (2).

11. A device according to claim 1, in which the measuring socket (2) at least, is made of steel.

12. A method of measuring the stresses exerted on a drilling tool in operation, by a transmission shaft having an axis, characterized in that a device according to claim 1 is inserted coaxially into a cylindrical compartment coaxially formed in a section of said shaft (OM), between the tool (TR) and the nearest area (ZA) where another stress is likely to be applied to said shaft, the socket's stiffness being selected o be less than 1% of the stiffness of this shaft portion so that the stresses exerted upon said anchoring means (15, 16) are low.

# FIG.1

SB

SA

ZA

OR

TR

# FIG.3

CM

10

16

OM

2

LM

LM

# FIG.2

GM

MF

DA

OM

LM

CA

TM

FIG.4

FIG.5

FIG.6

FIG.7

FIG.8